Europäisches Patentamt

European Patent Office

Office européen des brevets

(19)

(11) Veröffentlichungsnummer: **0 087 039**
**B1**

(12) # EUROPÄISCHE PATENTSCHRIFT

(45) Veröffentlichungstag der Patentschrift:
**12.06.85**

(21) Anmeldenummer: **83101112.7**

(22) Anmeldetag: **07.02.83**

(51) Int. Cl.⁴: **B 01 J 8/24, B 01 J 8/00,**
**B 01 J 2/16, F 26 B 3/08**

(54) Verfahren zum gleichzeitigen Sichten und geregelten, kontinuierlichen Austrag von körnigem Gut aus Wirbelbettreaktoren.

(30) Priorität: **20.02.82 DE 3206236**

(43) Veröffentlichungstag der Anmeldung:
**31.08.83 Patentblatt 83/35**

(45) Bekanntmachung des Hinweises auf die Patenterteilung:
**12.06.85 Patentblatt 85/24**

(84) Benannte Vertragsstaaten:
**CH DE FR GB LI**

(56) Entgegenhaltungen:
**FR - A - 1 483 696**
**FR - A - 2 078 592**
**FR - A - 2 418 669**
**US - A - 3 935 825**

(73) Patentinhaber: **BAYER AG, Konzernverwaltung RP Patentabteilung, D-5090 Leverkusen 1 Bayerwerk (DE)**

(72) Erfinder: **Stopp, Gerhard, Dr., Walter-Flex-Strasse 21, D-5090 Leverkusen (DE)**
Erfinder: **Kreutzer, Karl-Heinz, Elisabeth-Langgässer-Strasse 7, D-5090 Leverkusen (DE)**
Erfinder: **Karkossa, Horst, Immigrather Strasse 57, D-5653 Leichlingen (DE)**
Erfinder: **Mannes, Karl, Dr., Kurt-Schumacher-Ring 119, D-5090 Leverkusen 1 (DE)**
Erfinder: **Laakmann, Hans-Joachim, Rosslenbruch 36, D-5653 Leichlingen (DE)**
Erfinder: **Trescher, Viktor, Dr., Völklinger Strasse 7, D-5090 Leverkusen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft ein Verfahren zur gleichzeitigen Herstellung und Sichtung von granulatförmigem Gut, bei dem ein flüssiges Ausgangsprodukt in einen Fliessbettreaktor eingesprüht wird, der Granulataufbau im Fliessbett stattfindet und das fertige Granulat einen der Schwerkraft entgegengerichteten Sichtgasstrom passiert. Ferner betrifft die Erfindung eine Vorrichtung zur Durchführung des Verfahrens, die im Prinzip aus einem Fliessbettreaktor mit einem Lochboden, einer Wirbelgaszuleitung und einem an der tiefsten Stelle des Lochbodens angesetzten Austragsrohr besteht.

Verfahren (LSG-Verfahren, *liquid-solid-gas contracting*) und Vorrichtungen (z. B. ® Vometec) zum Agglomerieren, Granulieren, Trocknen und Sichten sind bekannt, bei denen eine Flüssigkeit in ein im fluidisierten Zustand befindliches Bett eingesprüht wird. Zum Austrag des Granulates wird periodisch ein Kegelventil an der tiefsten Stelle des geneigten Frittenbodens geöffnet. Mit solchen Vorrichtungen ist bei vielen Stoffen nur ein diskontinuierlicher Betrieb möglich. Bei der Öffnung des Ventils wird das Fliessbett erheblich gestört. Ausserdem ist die Sichtwirkung gering. Es werden teilweise noch zu kleine Granulatteilchen ausgetragen, andererseits ist bei manchen Teilchen die Verweilzeit so gross, dass Teilchen zu gross werden und nicht mehr ausgetragen werden können, es sei denn, es wurde eine das Fliessbett störende, aufwendige Zerkleinerungsvorrichtung vorgesehen oder es wurden ausserhalb des eigentlichen Fliessbettes Vorrichtungen zum Klassieren und Zerkleinern der Grobanteile mit Rückführung der Feinanteile angebracht, die ökonomisch aufwendiger sind und eine Inertisierung erschweren. Stillstandszeiten sind sonst unvermeidbar. Derartige Aparaturen sind z. B. beschrieben in „Chemie-Anlagen und Verfahren" 8 (1971) 49/51 oder „Chem. Ing. Techn.", 48, 3 (1976), 199/205.

In den FR-A Nrn. 1483696 und 2418669 werden Verfahren zur Wirbelsichtgranulation (Fliessbettgranulation) beschrieben, bei denen der Granulataufbau ausgehend von pulverigen Feststoffen durch Agglomeration im Fliessbett stattfindet. Um die bis zu einer bestimmten Grösse angewachsenen Körnchen (Granalien) selektiv aus dem Fliessbett zu entfernen, wird von unten her ein Gasstrahl in das Fliessbett eingeblasen.

Der Erfindung liegt die Aufgabe zugrunde, den Austrag aus Fliessbettapparaturen zu verbessern, insbesondere soll ein kontinuierlicher Austrag möglich sein, wobei neben wirtschaftlichen Vorteilen die gleichmässigere Produktqualität eine entscheidende Forderung ist. Die Störanfälligkeit der Austragsvorrichtung ist zu veringern; es soll eine bessere und darüber hinaus regelbare Sichtungen möglich sein.

Diese Aufgabe wird, ausgehend von dem eingangs beschriebenen Verfahren, erfindungsgemäss dadurch gelöst, dass der Sichtgasstrom in eine unterhalb des Fliessbettreaktors angeordnete, verengte, mit einem perforierten Ausblasboden abgeschlossene Zone eingeleitet und in dieser Zone ein zweites, der Sichtung dienendes Fliessbett aufrechterhalten wird, aus dem das gesichtete Granulat durch den Ausblasboden kontinuierlich ausgetragen und entnommen wird.

Vorteilhaft wird dabei die Gasmenge, die Temperatur und die Höhe des Reaktorfliessbettes so eingestellt, dass Granulate mit einem Durchmesser im Bereich von 0,05 bis 5, bevorzugt 0,1 bis 2 mm, und einer inneren Oberfläche im Bereich von 1 bis 6, bevorzugt 1,5 bis 5 m²/g, entstehen.

Weiterhin betrifft die Erfindung eine Vorrichtung zur Durchführung des Verfahrens, bestehend aus einem Fliessbettreaktor mit einem Lochboden, einer Wirbelgaszuleitung und einem an der tiefsten Stelle des Lochbodens angesetzten Austragsrohr. Die Vorrichtung ist erfindungsgemäss dadurch gekennzeichnet, dass das Austragsrohr an seinem untersten Ende eine perforierten Ausblasboden mit einer zentrisch angeordneten Auslassöffnung einer Sichtgaszuführungsleitung aufweist. Bei einer bevorzugten Ausführungsform ist am unteren Ende des Austragsrohres eine erweiterte Kammer mit Gaszufuhr und Feststoffaustragsorgan angeordnet.

Die Vorteile des erfindungsgemässen Verfahrens liegen in der Erhöhung der Produktqualität. Es ist eine gleichbleibende Granulatgrösse erzielbar. Durch geeignete Einstellung der Gasmengen, der Temperatur, der Strömungsgeschwindigkeiten, der relativen Feuchte und der Höhe des Wirbelbetts lässt sich je nach Produkt einfach eine gewünschte mittlere Granulatgrösse auswählen. Mit dem erfindungsgemässen Verfahren ist ein störungsfreier Dauerbetrieb möglich, wobei bevorzugt die Grobanteile des im Fliessbett befindlichen Granulats entnommen werden und die Feinanteile weitgehend, die Staubanteile vollständig im Fliessbett verbleiben. Das Sichtungsgas kann zur Nachtrocknung benutzt werden, wodurch besonders die Granulierung von stark hygroskopischen Gütern erleichtert wird.

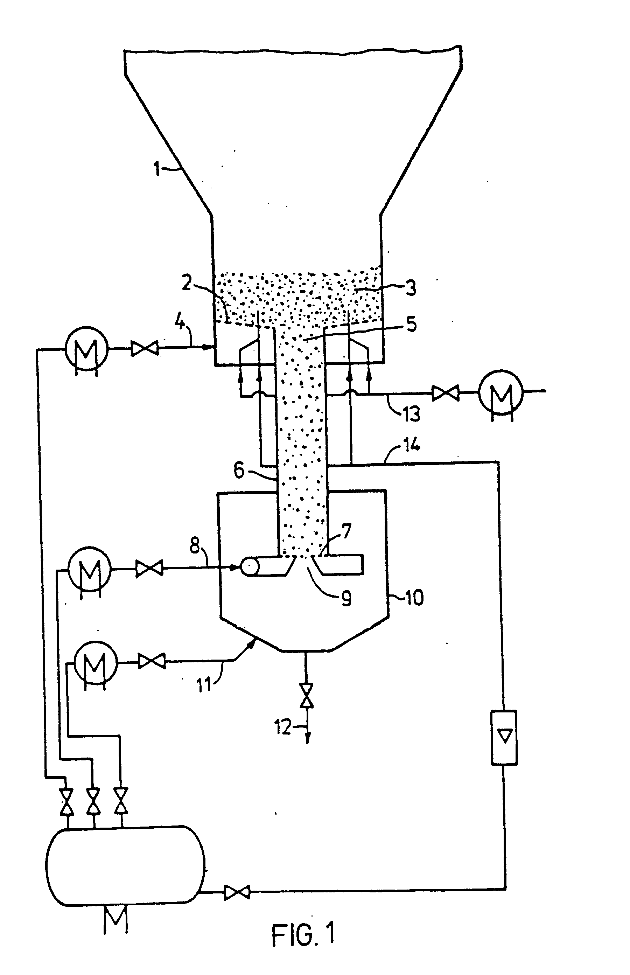

Das erfindungsgemässe Verfahren mit der Vorrichtung ist beispielhaft in der Zeichnung und im Folgenden erläutert.

Am Boden eines Fliessbetttrockners 1 tritt durch einen Lochblendenboden 2 das Niederdruckfluidisiergas für das Fliessbett 3 bei 4 ein. Der Lochblendenboden 2 ist ein zur Mitte hin geneigter perforierter Boden mit einer Austrittsöffnung 5. Unterhalb dieser Austrittsöffnung 5 ist ein Austragsrohr 6, das nicht notwendigerweise zylindrisch sein muss. Am Boden dieses Austragsrohrs 6 ist wiederum ein perforierter Boden 7 vorhanden, durch den über 8 ein Gas aus feinen Öffnungen zur Aufrechterhaltung eines Sichtvorganges über 7 strömt. Dieser Boden 7 wird zur besseren Unterscheidung als Ausblasboden 7 bezeichnet. Der Ausblasboden 7 ist hier eben und enthält eine Öffnung 9, deren Durchmesser gegebenenfalls veränderbar ist.

Im Beispiel hat bei einem Fliessbettdurchmesser von 400 mm das Austragsrohr 6 über dem Ausblasboden 7 einen Durchmesser von 80 mm, die Austrittsöffnung 9 verläuft kegelförmig, auf der

Oberseite des Ausblasbodens ist der Durchmesser 20, unten 40 mm. Der Ausblasboden 7 ist von einem Gehäuse 10 umschlossen, in dem über 11 ein Gas zugeführt werden kann. Im Betriebszustand ist der Druck in 10 höher als in 6 und dort wiederum höher als in 3. Das ausgetragene Gut sammelt sich am Boden des Gehäuses 10 und wird über 12 bei Bedarf entnommen, ohne dass das Fliessbett gestört wird. Die erfindungsgemässe Austragsvorrichtung arbeitet jedoch auch ohne das Gehäuse 10, das Austragsgut rieselt dabei kontinuierlich durch die Öffnung 9 in geschlossene Auffangbehälter. Der Sichtvorgang über 7 wird durch die Öffnung 9 nicht gestört.

Über die Leitung 14 wird das Hochdruckzerstäubungsgas für die Zerstäuber, über die Leitung 13 die zu zerstäubende Lösung zugeführt. In der Figur sind der Übersichtlichkeit halber nur zwei Zerstäuber eingezeichnet; die Zerstäuber in Form von Zweistoffdüsen sind so angeordnet, dass die zerstäubte Lösung direkt in das Fluidisierbett hineinströmt.

Für ein bestimmtes Produkt wird durch Festlegung des Drucks, der Temperatur, der Düsenanordnung, der Betthöhe und der eingedüsten Menge der Gasströme die Kornverteilung im Fliessbett festgelegt. Der Lochblendenboden 2 ist zur Mitte geneigt; besonders die grösseren schwereren Teilchen bewegen sich zur Mitte und fallen durch das Austragsrohr 6. Das bei 8 und gegebenenfalls bei 11 eintretende Gas sichtet das granulierte Gut. Die Geschwindigkeit dieser Gasströme liegt über der aus dem Lochblendenboden 2 ausströmenden Gas. Im Austragsrohr 6 stellt sich auf diese Weise eine Gasströmung entgegen der Austragsrichtung ein. Mit dieser Vorrichtung ist ein kontinuierlicher Austrag aus dem Trockner möglich; es kommt zu keiner Störung des Fliessbettes; es wird aber noch eine zusätzliche Sichtung erreicht. Die Sichtwirkung lässt sich noch weiter steigern und regeln, wenn auch durch die Öffnung 9 entgegen der Austragsrichtung ein Gas strömt. Durch die durch die Öffnung 9 strömende Gasmenge wird auch die auszutragende Menge reguliert. Durch geeignete bekannte Massnahmen beim Granulataustrag über 12 wird weder das Fliessbett über 2 noch über 7 gestört.

Nach dem erfindungsgemässen Verfahren ist es möglich, organische Zwischenprodukte, Pharmazeutika, Gerbstoffe, Farbstoffe, Pflanzenschutzmittel, Waschmittel, Nahrungsmittel aus wässerigen oder nichtwässerigen Lösungsmitteln ohne oder mit Zusatz von Bindemitteln in vorteilhafter Weise zu granulieren und kontinuierlich aus dem Wirbelbettreaktor auszutragen. Besonders günstig hat sich das erfindungsgemässe Verfahren für die Granulierung von Salzen anorganischer oder organischer Säuren und aromatischer Hydroxyverbindungen sowie von Acetylsalicylsäure und N-Acetyl-p-aminophenol erwiesen. Bevorzugt werden mit Hilfe des erfindungsgemässen Verfahrens Natriumphenolat, Kaliumphenolat, Kalium-β-naphtolat, Natrium-α-naphtolat, Natrium-β-naphtolat, Natrium-o-kresolat, Natriumbenzosulfonat, Natrium-m-nitrobenzosulfonat, Natriumsalicylat, Natriumcyclamat, das Kaliumsalz von 2-Hydroxycarbazol, N-Acetyl-p-aminophenol oder Acetylsalicylsäure granuliert.

Je nach Einstellung der Gasmenge, der Temperatur, der Strömungsgeschwindigkeit und der Höhe des Wirbelbetts kann man nach dem erfindungsgemässen Verfahren Granulate erhalten, die einen Durchmesser im Bereich von etwa 0,05 bis 5, bevorzugt von 0,1 bis 2 mm, besitzen. Die innere Oberfläche der so hergestellten Granulate liegt im allgemeinen im Bereich von 1 bis 6, bevorzugt 1,5 bis 5 m²/g (bestimmt nach BET-Methode, DIN 66 132).

Beispielsweise kann das erfindungsgemässe Verfahren wie folgt durchgeführt werden (am Beispiel der Granulierung von Natriumphenolat dargestellt):

In 560 kg/h Fluidisierstickstoff 4 von 200° C wurde kontinuierlich eine 67%ige wässerige Natriumphenolatlösung von 110° C in den Fliessbetttrockner 1 eingedüst. Die Menge der eingedüsten Lösung wurde so geregelt, dass sich in dem Fliessbetttrockner 1 eine Bettemperatur von ca. 115° C einstellte, wobei sich ein Fliessbett von granuliertem Natriumphenolat bildete. Der im abgeführten Fluidisiergas enthaltene Staubanteil wurde abgeschieden und in den Fliessbetttrockner 1 zurückgeführt. Die Entnahme des Grobanteils des Granulats aus dem Fliessbett 3 erfolgte kontinuierlich entgegen den aus den Zuleitungen 8 und 11 kommenden Sichtungsgasströmen (je 15 kg/h). Über die Öffnung 9 wurden 25 kg/h an granuliertem Natriumphenolat kontinuierlich entnommen und periodisch über 12 ausgetragen. Das Granulat hatte folgende Kornverteilung: Hauptanteil (90%) 0,8 bis 2 mm; innere Oberfläche 2,5 m²/g.

In der Zeichnung sind die erforderlichen Wärmetauscher, Pumpen, Anzeige- und Regelgeräte nicht vollständig angedeutet.

## Patentansprüche

1. Verfahren zur gleichzeitigen Herstellung und Sichtung von granulatförmigem Gut, bei dem ein flüssiges Ausgangsprodukt in einen Fliessbettreaktor eingesprüht wird, der Granulataufbau im Fliessbett stattfindet und das fertige Granulat einen der Schwerkraft entgegengerichteten Sichtgasstrom passiert, dadurch gekennzeichnet, dass der Sichtgasstrom in eine unterhalb des Fliessbettreaktors angeordnete, verengte, mit einem perforierten Ausblasboden abgeschlossene Zone eingeleitet, und in dieser Zone ein zweites, der Sichtung dienendes Fliessbett aufrechterhalten wird, aus dem das gesichtete Granulat durch den Ausblasboden kontinuierlich ausgetragen und entnommen wird.

2. Verfahren nach Anspruch 1, dadurch gekennzeichnet, dass die Gasmenge, die Temperatur und die Höhe des Reaktorfliessbettes so eingestellt werden, dass Granulate mit einem Durchmesser im Bereich von 0,05 bis 5, bevorzugt 0,1 bis 2 mm, und einer inneren Oberfläche im Bereich von 1 bis 6, bevorzugt 1,5 bis 4 m²/g, entstehen.

3. Vorrichtung zur Durchführung des Verfahrens nach den Ansprüchen 1 und 2, bestehend aus einem Fliessbettreaktor (1) mit einem Lochboden (2), einer Wirbelgaszuleitung (4) und einem an der tiefsten Stelle des Lochbodens (2) angesetzten Austragsrohr (6), dadurch gekennzeichnet, dass das Austragsrohr (6) an seinem untersten Ende einen perforierten Ausblasboden (7) mit einer zentrisch angeordneten im Querschnitt veränderbaren Auslassöffnung (9) und einer Sichtgaszuführungsleitung (8) aufweist.

4. Vorrichtung nach Anspruch 3, dadurch gekennzeichnet, dass am unteren Ende des Austragsrohres (6) eine erweiterte Kammer (10) mit Gaszufuhr (11) und Feststoffaustragsorgan (12) angeordnet ist.

5. Verwendung der Vorrichtung nach den Ansprüchen 3 und 4 zur Herstellung von granulatförmigen organischen Zwischenprodukten, Pharmazeutika, Gerbstoffen, Farbstoffen, Pflanzenschutzmitteln, Waschmitteln oder Nahrungsmitteln.

## Claims

1. Process for the simultaneous production and classification of granular material, in which a liquid starting product is sprayed into a fluidised bed reactor, the formation of the granules takes place in the fluidised bed and the finished granules pass through a stream of classification gas moving in an opposite direction to the force of gravity, characterised in that the stream of classification gas is passed into a narrowed zone, which is arranged below the fluidised bed reactor and is terminated by a perforated blow-out plate, and in this zone a second fluidised bed is maintained for the purpose of classification, from which the classified granules are continuously discharged and withdrawn through the blow-out plate.

2. Process according to Claim 1, characterised in that the quantity of gas, the temperature and the height of the reactor fluidised bed are adjusted in such a manner that granules having a diameter in the range of 0.05 to 5 mm, preferably 0.1 to 2 mm, and an internal surface area in the range of 1 to 6 m²/g, preferably 1.5 to 4 m²/g, are formed.

3. Apparatus for carrying out the process according to Claims 1 and 2, consisting of a fluidised bed reactor (1) with a perforated plate (2), a feed line (4) for the fluidising gas and a discharge tube (6) attached to the lowest point of the perforated plate (2), characterised in that the discharge tube (6) has at its lowest end a perforated blow-out plate (7) with a centrally arranged outlet (9), the diameter of which can be varied, and a feed line (8) for the classification gas.

4. Apparatus according to Claim 3, characterised in that a widened chamber (10) with a gas feed (11) and a discharge device (12) for solids is arranged at the bottom end of the discharge tube (6).

5. Use of the apparatus according to Claims 3 and 4 for the production of granular organic intermediate products, pharmaceuticals, tanning agents, dyestuffs, plant protection agents, detergents or foodstuffs.

## Revendications

1. Procédé pour la fabrication et le classement simultanés de matériau en forme de granulat, dans lequel on introduit, par pulvérisation, dans un réacteur à lit fluidisé un produit liquide au départ, dans lequel de plus apparaît, dans le lit fluidisé, la structure du granulat et dans lequel le granulat fini traverse un courant de gaz de classement en direction opposée de la pesanteur, caractérisé en ce que le courant de gaz de classement est introduit dans une zone disposée sous le réacteur à lit fluidisé, rétrécie et obturée par un fond d'échappement perforé et que dans cette zone est maintenu un deuxième lit fluidisé servant au classement et dont on évacue et prélève en continu le granulat classé par le fond d'échappement.

2. Procédé selon la revendication 1, caractérisé en ce que le débit de gaz, la température et le niveau du lit fluidisé du réacteur sont réglés de façon qu'il apparaisse des granulats d'un diamètre dans la plage de 0,05 à 5 mm, de préférence 0,1 à 2 mm et d'une surface interne dans la plage de 1 à 6 m²/g, de préférence 1,5 à 4 m²/g.

3. Dispositif pour l'exécution du procédé selon les revendications 1 et 2, constitué d'un réacteur à lit fluidisé (1) à fond perforé (2), d'une conduite de gaz turbulent (4) et d'un tube d'évacuation (6) rapporté à la position la plus basse du fond perforé (2), caractérisé en ce que le tube d'évacuation (6) présente à son extrémité inférieure un fond d'échappement perforé (7) présentant une ouverture de sortie (9) de section variable, disposée dans l'axe et une conduite d'introduction du gaz de classement (8).

4. Dispositif selon la revendication 3, caractérisé en ce qu'à l'extrémité inférieure du tube d'évacuation (6) est disposée une chambre élargie (10) avec introduction de gaz (11) et organe d'évacuation du produit solide (12).

5. Utilisation du dispositif selon les revendications 3 et 4 pour la fabrication de produits organiques en forme de granulats comme semi-produits, produits pharmaceutiques, produits tannants, colorants, produits phytosanitaires, produits lessiviels ou produits alimentaires.

FIG. 1